# EUROPÄISCHE PATENTSCHRIFT

(11) **EP 2 867 933 B1**
(45) Veröffentlichungstag und Bekanntmachung des Hinweises auf die Patenterteilung: **21.02.2018**
(21) Anmeldenummer: 13721964.8
(22) Anmeldetag: 08.05.2013
(51) Int. Cl.: H01M 2/10

(54) **ENERGIESPEICHERMODUL AUS MEHREREN PRISMATISCHEN SPEICHERZELLEN**
ENERGY STORAGE MODULE CONSISTING OF A PLURALITY OF PRISMATIC STORAGE CELLS
MODULE D'ACCUMULATION D'ÉNERGIE COMPOSÉ DE PLUSIEURS CELLULES PRISMATIQUES

(30) Priorität: 28.06.2012 DE 102012211180
(43) Veröffentlichungstag der Anmeldung: 06.05.2015
(73) Patentinhaber: Bayerische Motoren Werke Aktiengesellschaft, 80809 München (DE)
(72) Erfinder: FLAHAUT, Nicolas, 81547 München (DE); IDIKURT, Tuncay, 81541 München (DE); WÖSLE, Gerd, 80469 München (DE)
(86) Internationale Anmeldenummer: PCT/EP2013/059629
(87) Internationale Veröffentlichungsnummer: WO 2014/000933

(56) Entgegenhaltungen:
- WO-A1-2012/065855
- DE-A1-102010 013 034
- DE-A1-102011 084 660
- JP-A- H07 142 043
- JP-A- 2002 141 036
- JP-A- 2002 203 527
- US-A1- 2011 104 548
- US-A1- 2011 206 948
- US-A1- 2012 064 386

## Beschreibung

Die Erfindung betrifft ein Energiespeichermodul für eine Vorrichtung zur Spannungsversorgung, insbesondere eines Kraftfahrzeugs, aus mehreren prismatischen Speicherzellen, die, zumindest in einer Reihe gestapelt, hintereinander angeordnet sind, und eine Energiespeicheranordnung mit dem Energiespeichermodul.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Die Reihe aus gestapelten Speicherzellen wird vorzugsweise zwischen zwei Endplatten verspannt. Die zwei Endplatten sind über Zuganker miteinander verbunden. Die Verspannungsrichtung steht somit senkrecht zu den Endplatten. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Üblicherweise wird eines der Energiespeichermodule oder es werden mehrere der Energiespeichermodule in einer tragenden Struktur, beispielsweise ausgestaltet als Gehäuse, montiert.

Insbesondere in einem Kraftfahrzeug ist der Energiespeicher unterschiedlichsten thermischen Belastungen ausgesetzt. Im Winter muss je nach Einsatzgebiet die extreme Umgebungstemperatur des Fahrzeugs beachtet werden. Im Sommer addiert sich zu der hohen Umgebungstemperatur die Belastung durch die Abgasanlage. Hier kann es durch einen hohen Strahlungseintrag zu Temperaturen bis über 100° kommen. Lithium-Ionen-Zellen sollen in einem idealen Betriebstemperaturbereich zwischen 20°C und 40°C betrieben werden. Für eine optimale Betriebsstrategie ist insbesondere ein sehr geringer Temperaturunterschied zwischen den einzelnen Zellen des Energiespeichermoduls notwendig.

Es ist Aufgabe vorliegender Erfindung, ein Energiespeichermodul und eine Energiespeicheranordnung bereitzustellen, die bei kostengünstiger Herstellung und Montage möglichst effizient betrieben werden können.

Die Lösung der Aufgabe erfolgt durch die unabhängigen Ansprüche. Die abhängigen Ansprüche haben bevorzugte Weiterbildungen der Erfindung zum Gegenstand.

Somit wird die Aufgabe gelöst durch ein Energiespeichermodul für eine Vorrichtung zur Spannungsversorgung. Insbesondere wird das Energiespeichermodul in einem Kraftfahrzeug zum Antrieb des Fahrzeugs verwendet. Das Energiespeichermodul umfasst mehrere prismatische Speicherzellen, die, zu mindestens einer Reihe gestapelt, hintereinander angeordnet sind. Des Weiteren sind zwei Endplatten und zumindest ein Zugelement vorgesehen. Die zumindest eine Reihe aus gestapelten Speicherzellen wird zwischen den zwei Endplatten über die Zugelemente verspannt. Die Endplatten weisen Auflageflächen auf. Mit diesen Auflageflächen kann das Energiespeichermodul in einer tragenden Struktur montiert werden. Die tragende Struktur ist beispielsweise ein Gehäuse in einem Kraftfahrzeug zur Aufnahme mehrerer Energiespeichermodule. Im Rahmen der Erfindung wurde erkannt, dass über diese Auflageflächen ein reger Temperaturaustausch zwischen den Endplatten und der tragenden Struktur stattfindet. Dieser Temperaturaustausch beeinflusst das Temperaturmanagement des Energiespeichermoduls erheblich. Erfindungsgemäß wird deshalb auf der Auflagefläche ein thermisch isolierendes Element aufgesetzt. Dieses thermisch isolierende Element verhindert soweit wie möglich den Wärmeübergang zwischen der jeweiligen Endplatte und der tragenden Struktur.

Zum Befestigen des Energiespeichermoduls in der tragenden Struktur umfasst das Energiespeichermodul zumindest einen Bolzen. Dieser Bolzen ist insbesondere als Schraube ausgebildet. Der Bolzen ragt durch die Auflagefläche hindurch und kann somit das Energiespeichermodul mit der tragenden Struktur verbinden. Das thermisch isolierende Element ist insbesondere so angeordnet, dass es ebenfalls von dem Bolzen durchbrochen wird. Hierzu umfasst das thermisch isolierende Element eine Aussparung, insbesondere ein Durchgangsloch.

Besonders bevorzugt wird an allen Auflageflächen aller Endplatten des Energiespeichermoduls ein thermisch isolierendes Element angesetzt.

In einer einfach zu gestaltenden Ausbildung, die nicht Gegenstand der Erfindung ist, ist das thermisch isolierende Element eine Unterlegscheibe. Diese Unterlegscheibe wird auf die Auflagefläche aufgesetzt und bildet somit eine Trennung zwischen Endplatte und tragender Struktur. Gemäß der Erfindung ist es möglich, das thermisch isolierende Element mit einem weiteren Bestandteil des Energiespeichermoduls direkt zu verbinden: das Energiespeichermodul umfasst zumindest ein thermisch isolierendes Formteil zwischen einer der Endplatten und der an die Endplatte angrenzenden Speicherzelle. Dieses Formteil dient neben der thermischen Isolierung zwischen Speicherzelle und Endplatte gleichzeitig auch zur elektrischen Isolierung zwischen Speicherzelle und Endplatte. Es ist nun vorgesehen, dass das thermisch isolierende Element, welches auf der Auflagefläche zu liegen kommt, an diesem Formteil angeordnet wird. Insbesondere wird das Formteil mit zumindest einem der Elemente einstückig, beispielsweise als Spritzgussteil, gefertigt. Dabei kann das Element das gleiche Material aufweisen, wie das Formteil. Alternativ dazu ist es möglich, das thermisch isolierende Element als Einlegeteil im Spritzgussverfahren für das Formteil vorzusehen. In diesem Fall kann das Element aus einem beliebigen, gut wärmedämmenden Material bestehen. Das Formteil selbst besteht bevorzugt aus Kunststoff.

Des Weiteren ist bevorzugt vorgesehen, dass das Formteil plattenförmig ausgebildet ist. Diese Plattenform weist zwei Seiten auf. Eine Seite liegt an der Endplatte an. Die andere Seite liegt an der angrenzenden Speicherzelle an. Insbesondere erstreckt sich dabei das Formteil über eine gesamte, der Endplatte zugewandten Speicherzellenfrontfläche. Dadurch ist vollflächig eine thermische und elektrische Isolierung zwischen Speicherzelle und Endplatte gegeben.

Das thermisch isolierende Element, welches zur Auflage auf der Auflageflächen kommt, steht besonders bevorzugt senkrecht von dem plattenförmigen Formteil ab. Der wesentliche Bestandteil des Formteils, nämlich die Abtrennung zwischen Endplatte und Speicherzelle, steht parallel zur Endplatte und senkrecht zur Verspannungsrichtung des Energiespeichermoduls. Dementsprechend steht das thermisch isolierende Element senkrecht zur Endplatte und parallel zur Verspannungsrichtung.

Das thermisch isolierende Element weist bevorzugt eine Dicke zwischen 0,5 mm und 5 mm auf. Als Material für das thermisch isolierende Element werden bevorzugt Keramik, Kunststoff, Papier oder Pappe gewählt.

Vorteilhafterweise sind die Zugelemente als Zuganker ausgebildet. Alternativ können die Zugelemente auch ausgeführt sein als ein oder mehrere Spannbänder oder als Kombinationen, bestehend aus einer Anzahl von Schrauben und Muttern.

Die Erfindung umfasst des Weiteren eine Energiespeicheranordnung mit einer tragenden Struktur und zumindest einem in der tragenden Struktur aufliegenden Energiespeichermodul. Die tragende Struktur ist vorzugsweise als Gehäuse zur Aufnahme mehrerer Energiespeichermodule ausgebildet. Die im Rahmen des erfindungsgemäßen Energiespeichermoduls beschriebenen vorteilhaften Ausgestaltungen und Unteransprüche finden entsprechend vorteilhafte Anwendung auf die erfindungsgemäße Energiespeicheranordnung.

Weitere Einzelheiten, Merkmale und Vorteile der Erfindung ergeben sich aus der nachfolgenden Beschreibung und den Figuren. Es zeigen:
- Figur 1: ein nicht erfindungsgemäßes Energiespeichermodul gemäß einem ersten Ausführungsbeispiel,
- Figur 2: ein Detail des nicht erfindungsgemäßen Energiespeichermoduls gemäß dem ersten Ausführungsbeispiel,
- Figur 3: ein Detail in Explosionsdarstellung des erfindungsgemäßen Energiespeichermoduls gemäß einem zweiten Ausführungsbeispiel,
- Figur 4: ein Detail des erfindungsgemäßen Energiespeichermoduls gemäß einem dritten Ausführungsbeispiel.
Gleiche bzw. funktional gleiche Bauteile sind in allen Ausführungsbeispielen mit denselben Bezugszeichen versehen.

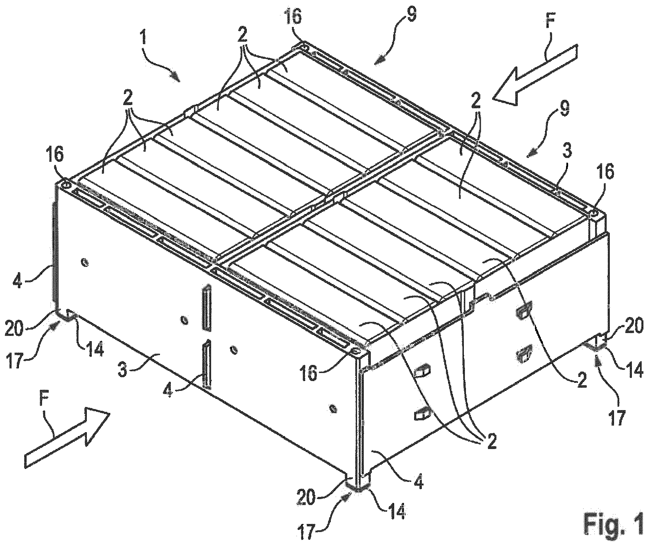

Figur 1 zeigt ein Speichermodul 1 gemäß dem ersten Ausführungsbeispiel. Das Speichermodul 1 setzt sich zusammen aus zwei Reihen 9. Jede Reihe 9 weist sechs prismatische Speicherzellen 2 auf. Die gestapelten Speicherzellen 2 sind über zwei parallele Endplatten 3 und Zugelemente, ausgebildet als drei Zuganker 4 miteinander verspannt. Durch die Verspannung wirkt die eingezeichnete Verspannkraft F auf die Speicherzellen 2. Im gezeigten Beispiel umfasst das Energiespeichermodul 1 mehrere Reihen 9. Allerdings kann die Erfindung genau so gut auch an einem Energiespeichermodul 1 mit nur einer Reihe 9 verwirklicht werden. Dass die Zugelemente im vorliegenden Ausführungsbeispiel als Zuganker 4 ausgebildet sind, soll keine einschränkende Wirkung auf die Erfindung haben. Selbstverständlich können die Zugelemente auch ausgeführt sein als ein oder mehrere Spannbänder oder als Kombinationen, bestehend aus einer Anzahl von Schrauben und Muttern.

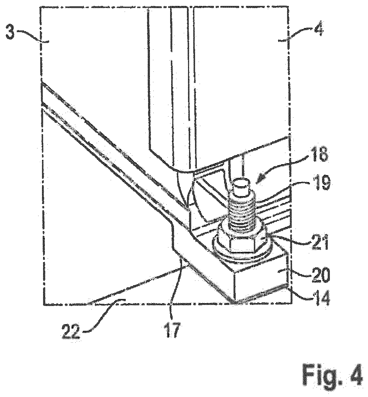

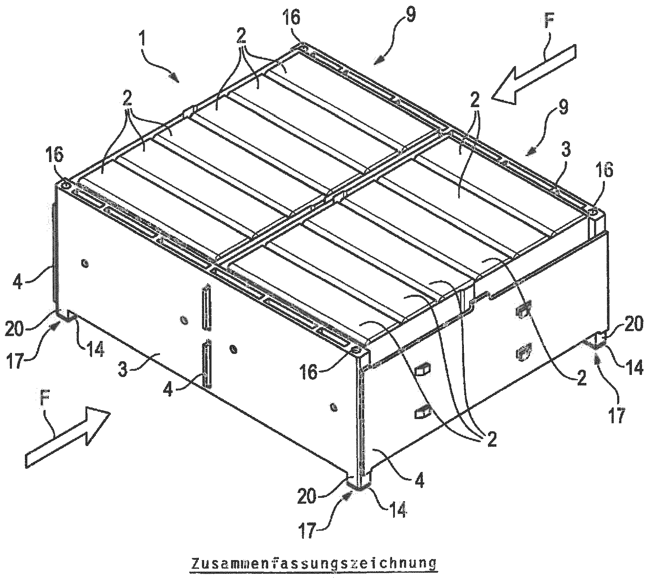

An jeder Endplatte 3 sind jeweils zwei Füße 20 ausgebildet. Die Unterseite der Füße wird als Auflagefläche 17 bezeichnet. Im Kraftfahrzeug steht das Energiespeichermodul 1 in einer tragenden Struktur 22 (s. Figur 4). Über Befestigungslöcher 16 in den Endplatten 3 wird das Energiespeichermodul 1 mit der tragenden Struktur 22 verschraubt. Um eine Wärmeübertragung zwischen den Endplatten 3 und der tragenden Struktur 22 weitestgehend zu vermeiden, wird auf jedem Fuß ein thermisch isolierendes Element 14 auf die Auflagefläche 17 aufgesetzt. Im ersten Ausführungsbeispiel, das nicht Gegenstand der Erfindung ist, kann das thermisch isolierende Element 14 beispielsweise als Unterlegscheibe aus Keramik oder Papier ausgebildet werden.

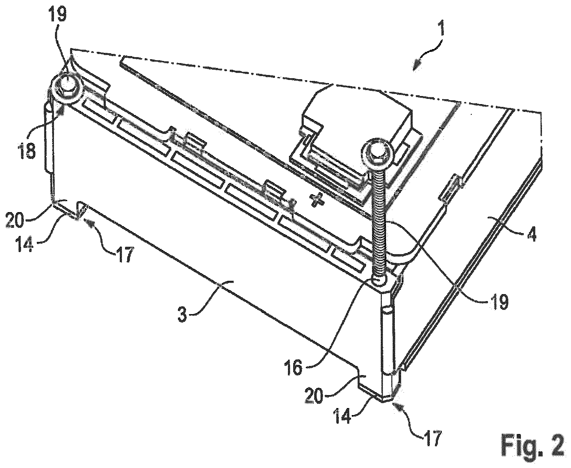

Figur 2 zeigt einen Ausschnitt des Energiespeichermoduls 1 aus Fig. 1. Die Darstellung in Figur 2 zeigt eine Verschraubung 18 mit einem als Schraube ausgebildeten Bolzen 19. In jedem Befestigungsloch 16 steckt ein Bolzen 19 zur Verschraubung des Energiespeichermoduls 1 mit der tragenden Struktur 22.

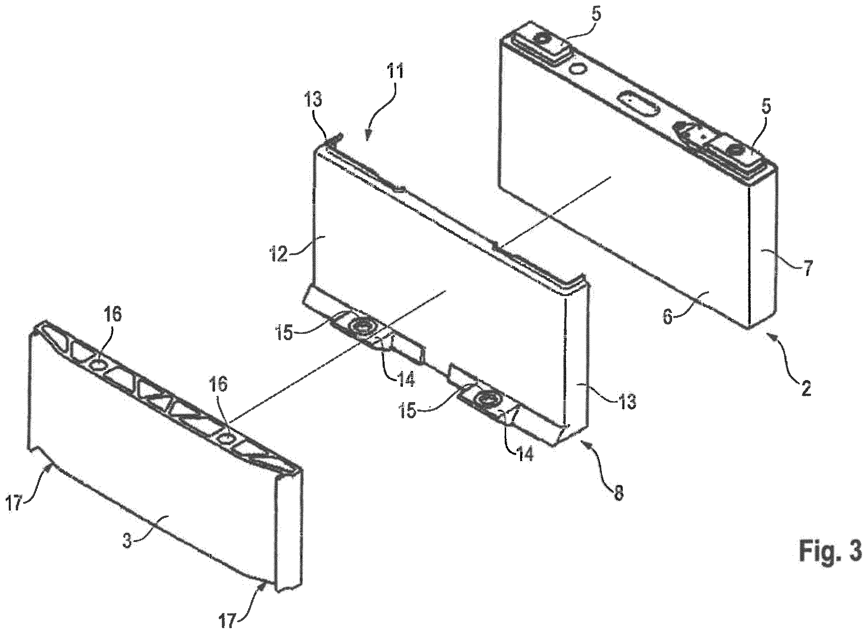

Figur 3 zeigt ein zweites Ausführungsbeispiel des Energiespeichermoduls 1. Hier ist lediglich eine der Speicherzellen 2, die Druckplatte 3 und ein dazwischenliegendes Formteil 8 aus Kunststoff in Explosionsdarstellung gezeigt. Die Anordnung nach Figur 3 ist für nur eine Reihe 9 aus Speicherzellen 2 vorgesehen. Ansonsten entspricht der wesentliche Aufbau des Energiespeichermoduls 1 des zweiten Ausführungsbeispiels dem ersten Ausführungsbeispiel.

Im zweiten Ausführungsbeispiel ist das Formteil 8 zwischen der Endplatte 3 und der angrenzenden Speicherzelle 2 eingesetzt. Das Formteil 8 dient sowohl der thermischen als auch der elektrischen Isolierung. Die Speicherzelle 2 umfasst zwei Anschlusspole 5, eine Speicherzellenfrontfläche 6 und mehrere Speicherzellenseitenflächen 7. Das Formteil 8 weist eine erste Formteilfläche 11, eine zweite Formteilfläche 12 und mehrere Seitenflügel 13 auf. Im montierten Zustand liegt die zweite Formteilfläche 12 an der Endplatte 3 an. Die erste Formteilfläche 11 liegt an der Speicherzellenfrontfläche 6 an. Die Seitenflügel 13 decken zumindest teilweise die Speicherzellenseitenflächen 7 ab. Integral mit dem Formteil 8 sind zwei thermisch isolierende Elemente 14 gefertigt. Die thermisch isolierenden Elemente 14 stehen senkrecht von dem plattenförmigen Formteil 8 ab. In den thermisch isolierenden Elementen 14 sind Durchgangslöcher 15 ausgebildet.

Die nicht dargestellte Unterseite der Endplatte 3 in Figur 2 wird wiederum als Auflagefläche 17 bezeichnet. Mit dieser Fläche liegt die Endplatte 3 an der tragenden Struktur 22 auf. Im montierten Zustand liegen die beiden thermisch isolierenden Elemente 14, welche integral mit dem Formteil 8 gefertigt sind, an der Auflagefläche 17 auf. Somit trennen die Elemente 14 die Endplatte 3 von der tragenden Struktur 22.

Über die Befestigungslöcher 16 und die Durchgangslöcher 14 kann die Verschraubung 18 zur Befestigung des Energiespeichermoduls 1 durchgesetzt werden.

Figur 4 zeigt das Energiespeichermodul 1 nach einem dritten Ausführungsbeispiel. Im Gegensatz zu den vorhergehenden Ausführungsbeispielen wird im dritten Ausführungsbeispiel die Verschraubung 18 nicht durch die gesamte Höhe der Endplatte 3 durchgesteckt. Im vierten Ausführungsbeispiel weist die Endplatte 3 nach außen vorstehende Füße 20 auf. Die Unterseite dieser Füße 20 stellt die Auflagefläche 17 dar. Zwischen der Auflagefläche 17 und der tragenden Struktur 22 wird das thermisch isolierende Element 14 eingesetzt.

### Bezugszeichenliste

- 1: Energiespeichermodul
- 2: Speicherzellen
- 3: Endplatten
- 4: Zugelemente, ausgebildet als Zuganker
- 5: Anschlusspole
- 6: Speicherzellenfrontfläche
- 7: Speicherzellenseitenfläche
- 8: Formteil
- 9: Reihe
- 11: erste Formteilfläche
- 12: zweite Formteilfläche
- 13: Seitenflügel
- 14: thermisch isolierende Elemente
- 15: Durchgangsloch
- 16: Befestigungsloch
- 17: Auflagefläche
- 18: Verschraubung
- 19: Bolzen/Schraube
- 20: Fuß
- 21: Mutter
- 22: tragende Struktur
- F: Vorspannkraft

## Patentansprüche

1. Energiespeichermodul (1) für eine Vorrichtung zur Spannungsversorgung, insbesondere eines Kraftfahrzeugs, umfassend
- mehrere prismatische Speicherzellen (2), die, zu mindestens einer Reihe (9) gestapelt, hintereinander angeordnet sind,
- zwei Endplatten (3) und zumindest ein Zugelement (4), wobei die zumindest eine Reihe (9) aus gestapelten Speicherzellen (2) zwischen den zwei Endplatten (3) über das Zugelement (4) verspannt ist, und wobei zumindest eine Endplatte zumindest eine Auflagefläche (17) zur Auflage auf einer das Energiespeichermodul (1) tragenden Struktur (22) umfasst, und
- ein thermisch isolierendes Formteil (8), das zwischen einer der Endplatten (3) und der an die Endplatte (3) angrenzenden Speicherzelle (2), angeordnet ist,
**dadurch gekennzeichnet, dass** an dem Formteil (8) zumindest ein thermisch isolierendes Element (14) dergestalt angeordnet ist, dass das Formteil (8) mit dem zumindest einen Element (14) einstückig, insbesondere als Spritzgussteil, gefertigt ist, und das zumindest eine
thermisch isolierende Element (14) auf der Auflagefläche (17) angeordnet ist, zur thermischen Isolation zwischen der Endplatte (3) und der tragenden Struktur (22), umfassend zumindest einen Bolzen (19), vorzugsweise ausgebildet als Schraube, zum Befestigen des Energiespeichermoduls (1) an der tragenden Struktur (22), wobei der Bolzen (19) durch das thermisch isolierende Element (14) hindurch geht.

2. Energiespeichermodul nach Anspruch 1, **dadurch gekennzeichnet, dass** an allen Auflageflächen (17) aller Endplatten (3) eines der thermisch isolierenden Elemente (14) angeordnet ist.

3. Energiespeichermodul nach einem der vorhergehenden Ansprüche, **dadurch gekennzeichnet, dass** das Formteil (8) plattenförmig ausgebildet ist, mit einer ersten Seite (11), an der die Endplatte anliegt, und mit einer der ersten Seite gegenüberliegenden zweiten Seite (12), an der die angrenzende Speicherzelle (2) anliegt.

4. Energiespeichermodul nach einem der vorhergehenden Ansprüche, **dadurch gekennzeichnet, dass** sich das Formteil (8) über eine gesamte der Endplatte (3) zugewandte Speicherzellenfrontfläche (6) erstreckt. \

5. Energiespeichermodul nach einem der vorhergehenden Ansprüche, **dadurch gekennzeichnet, dass** das thermisch isolierende Element (14) eine Dicke zwischen 0,5 mm und 5 mm aufweist.

6. Energiespeichermodul nach einem der vorhergehenden Ansprüche, **dadurch gekennzeichnet, dass** das thermisch isolierende Element (14) aus Keramik und/oder aus Kunststoff und/oder aus Papier und/oder aus Pappe besteht.

7. Energiespeicheranordnung umfassend eine tragende Struktur (22), vorzugsweise ausgebildet als Gehäuse, und zumindest ein in der tragenden Struktur (22) aufliegendes, vorzugsweise befestigtes, Energiespeichermodul (1) nach einem der vorhergehenden Ansprüche.

## Claims

1. An energy storage module (1) for a power supply device, especially a motor vehicle, comprising
- a plurality of prismatic storage cells (2) which, stacked to form at least one row (9), are arranged in series,
- two end plates (3) and at least one tensioning element (4), wherein the at least one row (9) of stacked storage cells (2) is braced between the two end plates (3) by means of the tensioning element (4), and wherein at least one end plate comprises at least one support surface (17) for resting on a structure (22) bearing the energy storage module (1), and
- a thermally insulating shaped part (8) which is arranged between one of the end plates (3) and the storage cell (2) adjoining the end plate (3),
**characterised in that** at least one thermally insulating element (14) is arranged on the shaped part (8) such that the shaped part (8) is manufactured in one piece with the at least one element (14), especially as an injection-moulded part, and the at least one thermally insulating element (14) is arranged on the support surface (17), for thermal insulation between the end plate (3) and the bearing structure (22), comprising at least one bolt (19), preferably configured as a screw, for fastening the energy storage module (1) to the bearing structure (22), wherein the bolt (19) passes through the thermally insulating element (14).

2. An energy storage module according to Claim 1, **characterised in that** one of the thermally insulating elements (14) is arranged on all the support surfaces (17) of all the end plates (3).

3. An energy storage module according to one of the preceding claims, **characterised in that** the shaped part (8) is plate-shaped, with a first side (11) on which the end plate rests, and with a second side (12) located opposite the first side, on which second side the adjoining storage cell (2) rests.

4. An energy storage module according to one of the preceding claims, **characterised in that** the shaped part (8) extends over an entire storage-cell front face (6) which faces the end plate (3).

5. An energy storage module according to one of the preceding claims, **characterised in that** the thermally insulating element (14) has a thickness of between 0.5 mm and 5 mm.

6. An energy storage module according to one of the preceding claims, **characterised in that** the thermally insulating element (14) comprises ceramic and/or of plastics material and/or of paper and/or of paperboard.

7. An energy storage arrangement comprising a bearing structure (22), preferably configured as a housing, and at least one energy storage module (1) according to one of the preceding claims which rests, preferably is fastened, in the bearing structure (22).

## Revendications

1. Module accumulateur d'énergie (1) destiné à un dispositif d'alimentation en tension, en particulier d'un véhicule comprenant :
- plusieurs cellules d'accumulation prismatiques (2) qui sont montées les unes derrières les autres en étant empilées en au moins une rangée (9),
- deux plaques d'extrémité (3) et au moins un élément de traction (4), la rangée (9) de cellules d'accumulation (2) empilées étant serrée entre les deux plaques d'extrémité (3) par l'intermédiaire de l'élément de traction (4), et au moins une plaque d'extrémité comprenant au moins une surface d'appui (17) pour permettre son application sur une structure (22) portant le module accumulateur d'énergie, et
- une pièce moulée thermiquement isolante (8) qui est montée entre l'une des plaques d'extrémité (3) et la cellule d'accumulation (2) contigüe à la plaque d'extrémité (3),
**caractérisé en ce que**
sur la pièce moulée (8) est monté au moins un élément thermiquement isolant (14) réalisé de sorte que la pièce moulée (8) soit fabriquée en une seule pièce en particulier sous la forme d'une pièce injectée, avec l'élément thermiquement isolant (14), et cet élément thermiquement isolant (14) est monté sur la surface d'appui (17) pour permettre l'isolation thermique entre la plaque d'extrémité (3) et la structure support (22), au moins un boulon (19), de préférence réalisé sous la forme d'une vis permettant de fixer le module accumulateur d'énergie (1) à la structure support (22), le boulon (19) passant au travers de l'élément d'isolation thermique (14).

2. Module accumulateur d'énergie conforme à la revendication 1, **caractérisé en ce que** l'un des éléments d'isolation thermique (14) est monté sur toutes les surfaces d'appui (17) de toutes les plaques d'extrémité (3).

3. Module accumulateur d'énergie conforme à l'une des revendications précédentes, **caractérisé en ce que** la pièce moulée (8) est réalisée en forme de plaque et s'applique par un premier côté (11) sur la plaque d'extrémité et par un second côté (12) opposé au premier côté sur la cellule d'accumulation (2) contigüe.

4. Module accumulateur d'énergie conforme à l'une des revendications précédentes, **caractérisé en ce que**, la pièce moulée (8) s'étend sur la totalité de la surface frontale des cellules d'accumulation (6) tournée vers la plaque d'extrémité (3).

5. Module accumulateur d'énergie conforme à l'une des revendications précédentes, **caractérisé en ce que**, l'élément thermiquement isolant (14) à une épaisseur comprise entre 0,5mm et 5mm.

6. Module accumulateur d'énergie conforme à l'une des revendications précédentes, **caractérisé en ce que**, l'élément thermiquement isolant (14) est réalisé en céramique et/ou en matériau synthétique et/ou en papier et/ou en carton.

7. Dispositif d'accumulation d'énergie comprenant une structure support (22) de préférence réalisée sous la forme d'un boîtier et au moins un module accumulateur d'énergie (1) conforme à l'une des revendications précédentes s'appliquant, dans la structure support (22) de préférence fixé sur celle-ci.
